# EUROPEAN PATENT SPECIFICATION

(11) **EP 1 530 864 B1**
(45) Date of publication and mention of the grant of the patent: **06.06.2007**
(21) Application number: 03792395.0
(22) Date of filing: 20.08.2003
(51) Int. Cl.: H04L 29/06, H04L 12/66

(54) **BEARER CONNECTION SIGNALING IN A DISTRIBUTED ARCHITECTURE**
SIGNALISIERUNG EINER TRÄGERVERBINDUNG IN EINER VERTEILTEN ARCHITEKTUR
SIGNALISATION A CONNEXION DE PORTEUSE DANS UNE ARCHITECTURE DISTRIBUEE

(30) Priority: 20.08.2002 US 404715 P
(43) Date of publication of application: 18.05.2005
(73) Proprietor: SIEMENS AKTIENGESELLSCHAFT, 80333 München (DE)
(72) Inventor: SIBILLE, Pierre-Yves, Boca Raton, FL 33487 (US); NAGEL, Thomas, Boca Raton, FL 33428 (US); BADENHORST, Danie, Boca Raton, FL 33498 (US)
(86) International application number: PCT/EP2003/009232
(87) International publication number: WO 2004/019584

(56) References cited:
- EP-A- 0 700 231
- WO-A-01/13599
- US-B1- 6 339 594

## Description

### BACKGROUND

### Field Of The Invention.

The present invention is directed to a telecommunication network for the transmission of voice information and particularly to signaling a bearer connection having a different protocol than the telecommunication network.

### Related Information.

In a distributed architecture, the backbone of the network is provided by one provider and the remaining functionality is provided by other providers connecting to the network. Problematically, the network employs one protocol while the connecting provides another, which frustrates the signaling of bearer connections of the different signaling protocol. Thus, there is a great customer demand for a solution that signals existing customer bearer connections from the resident network architecture.

Take for example an architecture that employs control plane signaling traditionally associated with voice-over-internet protocol (VoIP) bearer connections. Such an architecture is not set up to signal bearer connections of another protocol. On the other hand, it is not atypical for customers to utilize an asynchronous transfer mode (ATM) protocol.

WO 01/13599 A (Subbiah Baranitharan) 22 February 2001 (2001-02-22) describes providing an interworking unit between ATM and IP networks. However, Baranitharan is completely devoid of any description as to how any translation is to occur. He only indicates that "translation from one form of signalling message into other form requires knowledge service mapping across two different control planes." Page 13, lines 3-9. However, Baranitharan does not describe such knowledge. In fact, he leaves the reader completely in the dark as how to achieve such translation. Moreover, Baranitharan does not describe how to translate control codes from a first protocol to another. And, more importantly, how to do that without changing the format of the first protocol.

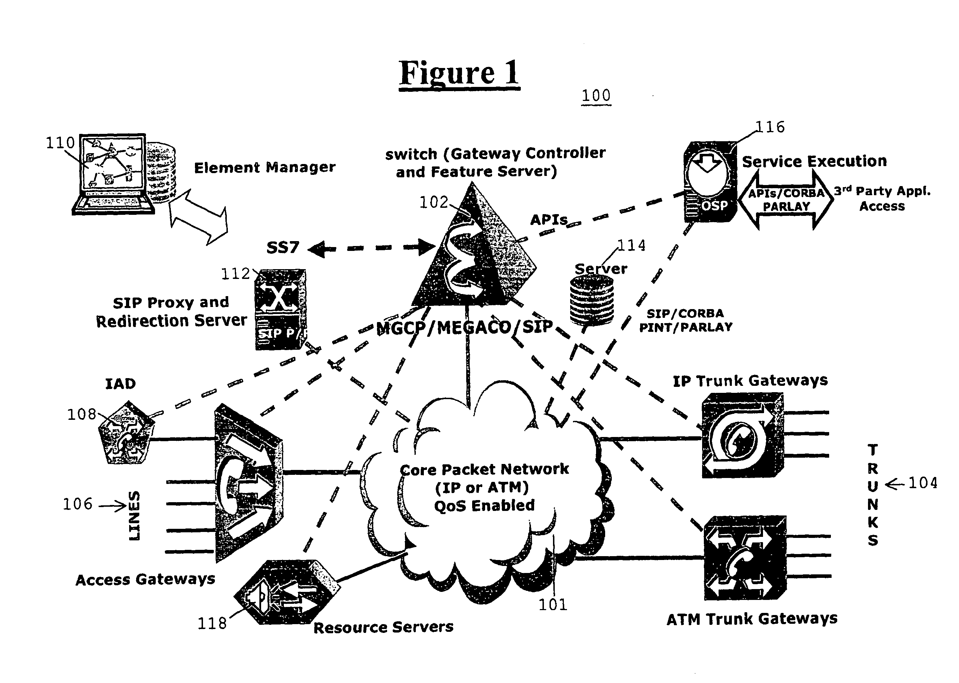

The problem is illustrated in more detail with reference to Figure 1, wherein a distributed architecture 100 encompasses access at the edge of the network 101, interfaces to the core transport and centralized network control. At the heart of the distributed architecture 100 is a switch 102, which may be a soft switch (a software application emulating a switch), which provides service control and network intelligence.

Trunk gateways 104 provide the capability to inter-work bearer payload between legacy TDM trunks and packet based virtual trunks. Line or Access gateways 106 provide a similar interworking capability for subscriber lines. An integrated access device (IAD) 108 is a customer-located platform that delivers integrated voice and data services.

The Element Management system 110 provides open standards based management interfaces and state of the art Graphical User Interface (GUI) for the management of network elements. Servers 112 provide support functionality such as authentication and announcement services, whilst a server database 114 provides the information for the servers. An OSP 116 may be provided to establish third party application access via an APIs/CORBA PARLAY and resource servers 118 may be provided for adding additional resources.

In the distributed architecture 100 of Figure 1, the signaling interface between a controlling switch 102 and gateways 104, 106, 108, also referred to as media gateways (MG) in the art, is commonly referred to as a vertical interface as it transcends the call control/application plane and the bearer/routing plane. In order to support a clear separation of call and bearer controls, a typical distributed architecture employs an open standard Gateway Control protocol (e.g.; MGCP or MEGACO/H.248) across this vertical interface as shown generally by reference numeral 110.

In the example shown, the core network employs control signaling in accordance with the Internet Protocol. However, the user community has defined standard Gateway Control packages (namely Media Gateway Controller Protocols, MGCP/MEGACO, and SIP) that must be used on the vertical interface in order to signal the control bearer connections. Also defined is a standard use of Session Description Protocol (SDP) parameters. In other words, such a distributed architecture 100 is not capable to signal the bearer connections directly.

What is needed, therefore, is a means or method for a telecommunications network to signal the bearer connection. What is needed is to signal a bearer connection of another protocol. A solution could be used which seamlessly migrates signals from one signaling protocol to another. In a specific application, VoIP signaling a VoATM bearer connection is needed.

### OBJECTS AND SUMMARY OF THE INVENTION

An object of the invention is to provide a telecommunications network capable to signal a bearer connection.

An object of the invention is to signal a bearer connection of another protocol.

An object of the invention is to seamlessly migrate signals from one signaling protocol to another.

An object of the invention is to provide VoIP signaling to a VoATM bearer connection.

These and other objects are achieved by the present invention in which a signaling method of a bearer connection coupled to a telecommunications network according to claim 1 is provided.

According to the objects of the invention, there is also provided an apparatus according to claim 11 for signaling a bearer connection coupled to a telecommunications network.

Further embodiments of the invention are in the dependent claims 2-10 and 12-18.

### BRIEF DESCRIPTION OF THE DRAWINGS

The present invention shall be described in reference to the following drawings which illustrate at least one example of the invention.
Figure 1 is a block diagram of a distributed architecture;
Figure 2 is a flow diagram of the invention;
Figure 3 is an address mapping of the invention;
Figure 4 is a port mapping of the invention;
Figure 5 is a block diagram of the invention;
Figures 6A, B are system and flow diagrams of the invention, respectively; and
Figure 7 is a flow diagram of the invention.

### DETAILED DESCRIPTION OF THE PREFERRED EMBODIMENTS

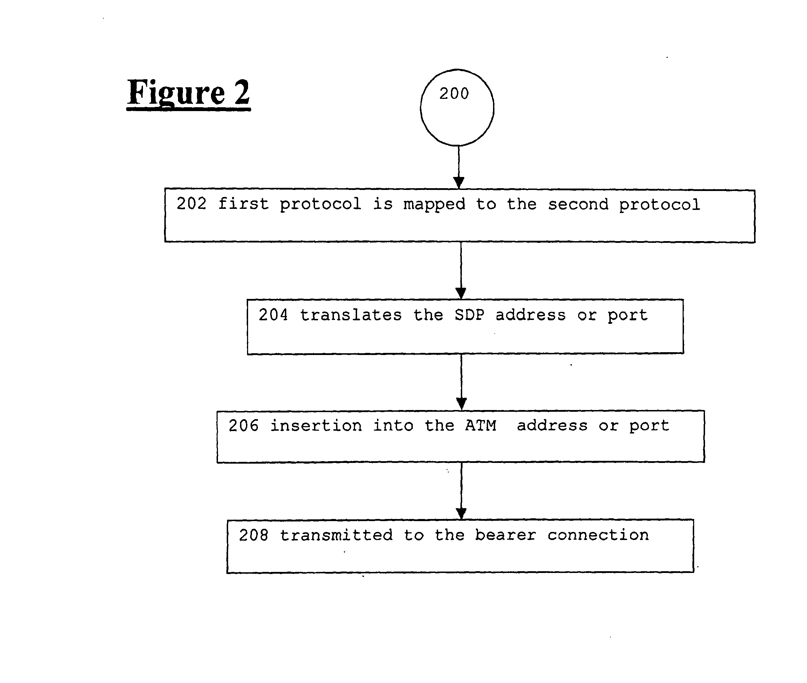

The present invention shall be discussed in reference to the flow diagram 200 shown in Figure 2, which illustrates a method for signaling a bearer connection of another protocol coupled to a telecommunications network. The telecommunications network employs a first protocol, which in the exemplary embodiment is VoIP. The bearer connection employs a second protocol, such as VoATM. However, its shall be understood that the invention is not so limited to any particular protocol, but encompasses at least signaling a bearer connection of a different protocol than the telecommunications network.

In step 202, the first protocol is mapped to the second protocol, or vice versa. Of course, the invention may map the entire first protocol to the second protocol, or at least a potion thereof.

As heretofore discussed, it is typical for a distributed architecture to employ an open standard Gateway Control Protocol, such as MGCP or MEGACO/H.248, across the vertical interface. Here now is an example of a mapping according to the invention to control VoATM connections using packages more commonly associated with VoIP connections. In Table I below, there is shown a Megaco Real-Time Transport RTP Package (RTP) mapped to an ATM Package (ATM).

**Table I**

| **Package Definition** | **VoIP** | **VoATM mapping** | **Comment** |
|---|---|---|---|
| Properties | N/A | N/A | |
| Events | N/A | N/A | |
| Signals | N/A | N/A | |
| Statistics | Packets sent (ps) | Cells sent (cs) | The packets sent field (rtp/ps) is populated with the number of ATM cells sent in accordance with /E1/. |
| | Packets received (pr) | Cells received (cr) | The packets received field (rtp/pr) is populated with the number of ATM cells received in accordance with /E1/. |
| | Packets lost (pl) | Cell loss (cl) | The packets lost field (rtp/pl) is populated with the number of ATM cells lost in accordance with /E1/. |
| | Jitter (jit) | Jitter (jit) | The jitter field (rtp/jit) is populated with the interarrival jitter in accordance with /E1/. |
| | Delay (delay) | Delay (delay) | The jitter field (rtp/delay) is populated with the average cell transmission delay in accordance with /E1/. |

It was also discussed that there is defined a standard use of Session Description Protocol (SDP) parameters. As shown in Table II(a) to II(c) below, the invention further provides a mapping of SDP parameters to control VOATM connections using parameter values more commonly associated with VoIP connections.

Table II(a) shows the Session Description Mappings for the Session Description Protocol.

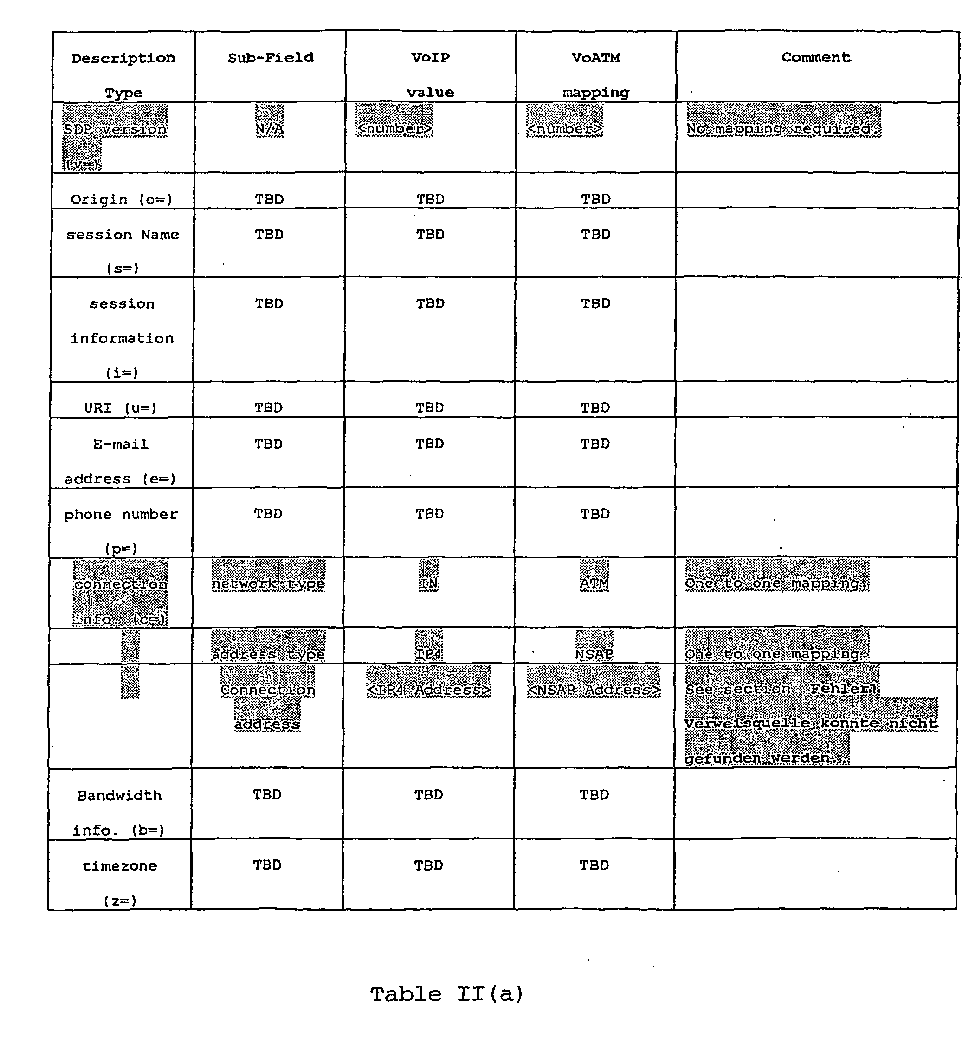

Table II(b) shows the Time Description Mappings for the Session Description Protocol.

**Table II(b)**

| **Description Types** | **SDP Value** | **VoIP** | **VoATM mapping** | **Comment** |
|---|---|---|---|---|
| Session time (t=) | TBD | TBD | TBD | |
| Repeat times (r=) | TBD | TBD | TBD | |

Table II(c) shows the Media Description Mappings for the Session Description Protocol.

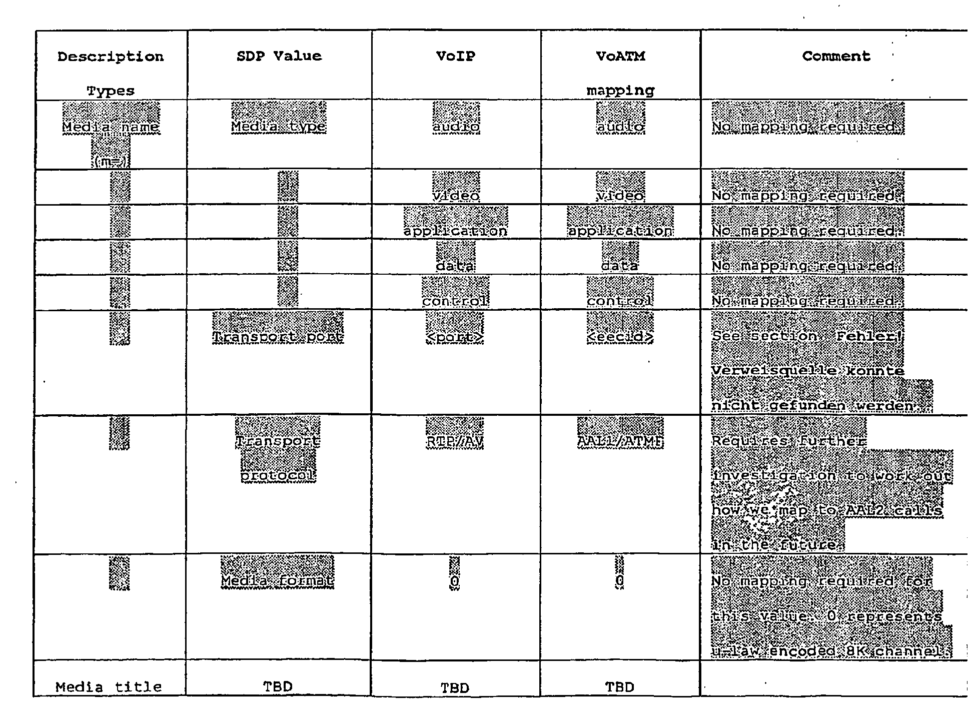

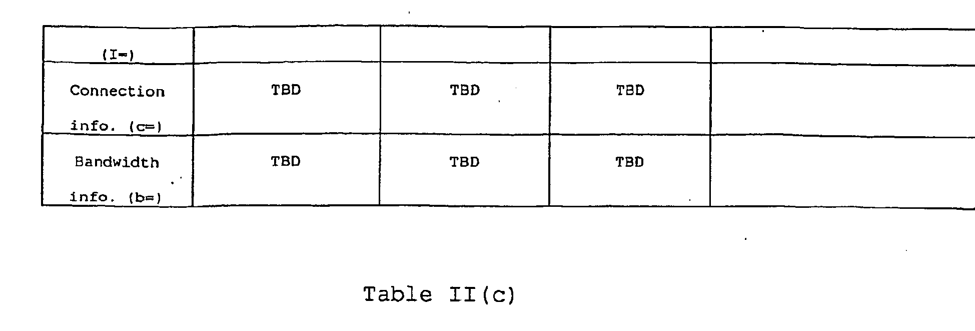

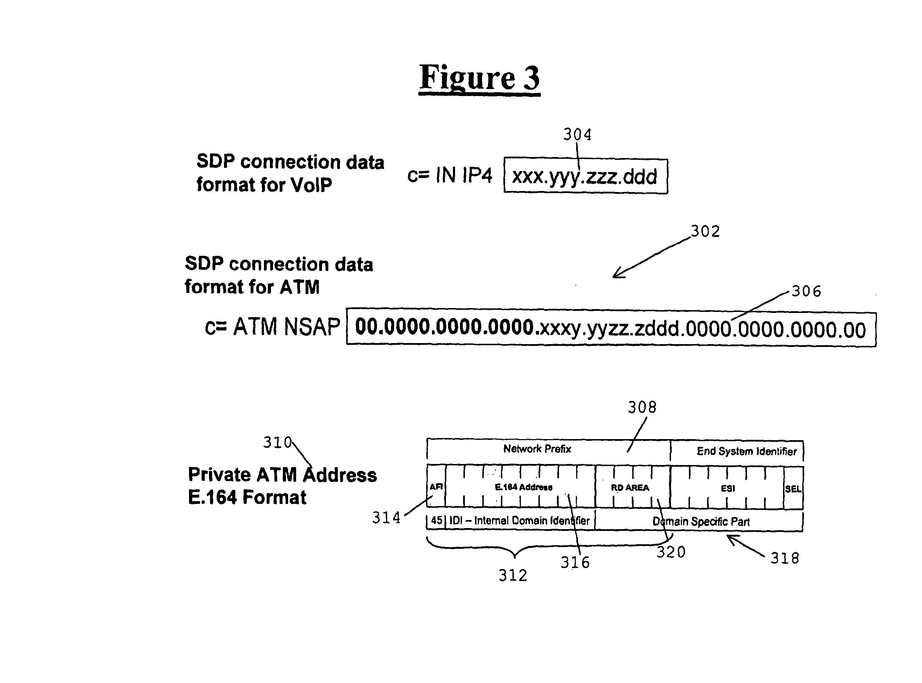

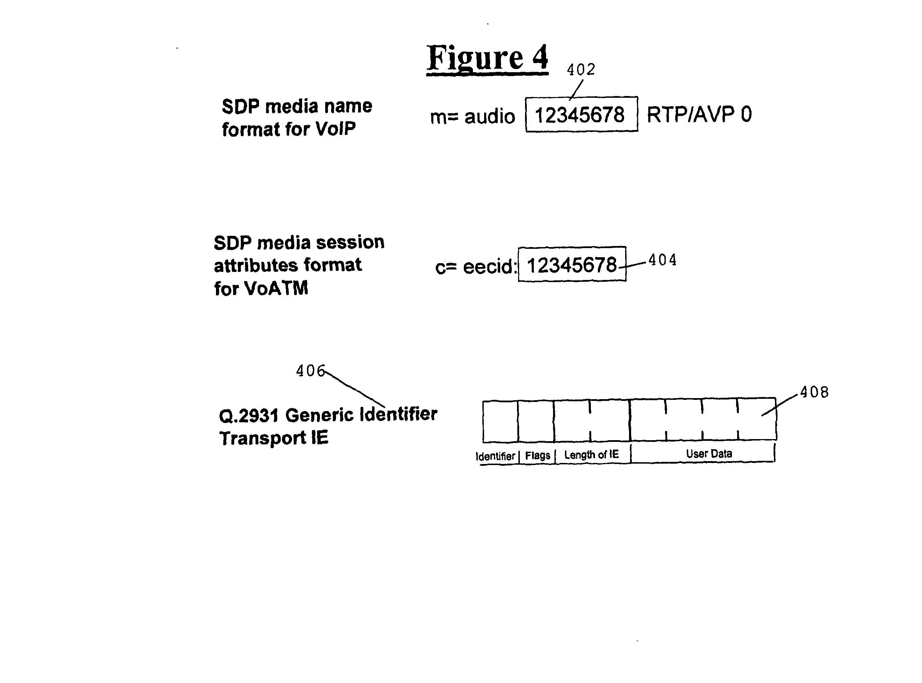

SDP further includes address and port information. Since other protocols, such as ATM in the present example, have a different structure for the addresses and port information, the present invention maps the address, or port, for SDP into an area of an ATM address, or port. As will be discussed further with respect to steps 204 and 206, the invention translates the SDP address or port into a suitable form for insertion into the ATM address or port. The manner in which the invention chooses the suitability of the address structure will be explained in the discussion of the Figures 3 and 4.

Figure 3 illustrates how IP address information transported in SDP connection data is mapped to the equivalent SDP ATM address format (and vice versa). Subsequently, this information is translated to an ATM End System Address (AESA) used in UNI signaling messages.

In general, the mapping is based on virtual addressing overlay as generally indicated by the reference numeral 302 whereby a private addressing scheme 304 is overlayed over the public addressing scheme 306 used by the ATM infrastructure. This method ensures that the mapping is segregated and is applicable to any public addressing scheme previously adopted by the ATM infrastructure.

In this particular example, the proposed ATM addressing redefines the Network Prefix field 308 of the E.164 ATM format (AFI=0x45) of the Private ATM address 310. The area of interest is the 24 digits (8 octets) 312 following the Authority and Format Identifier (AFI) field 314. This area is composed of three fields; the E.164 address itself 316, the Routing Domain (RD) 318 specifying a unique domain within the addressing scheme in use and the Area 320 identifying a unique area within the routing domain in use.

The invention redefines these three fields into a private mapped IP/ATM address 310. This 24 digits (8 octets) address would be subdivided into two fields; a 12 digits (6 octets) prefix ('000000000000') isolating this overlay virtual space from the AESA addressing scheme used by the ATM infrastructure and a second 12 digits (6 octets) field holding the end-point IP address of the form 'xxx.yyy.zzz.ddd'. Of course, this is merely an example and other address configurations are also possible.

It shall be appreciated that the present invention, maintains an ATM addressing scheme that does not violate standard ITU or ATM Forum addressing rules. Of course, it shall be understood that the present invention covers also a mapping that does not necessarily violate an ITU standard.

Returning now to the flow diagram of Figure 2, the private address 202 is translated into a signal suitable for insertion into the public address of the ATM protocol in step 204. For example, the SDP address is translated into the format xxx.yyy.zzz.ddd such that the translated address fits bit-wise within the area designated by the mapping.

In step 206, the translated address is inserted into the ATM protocol of the second protocol according to the mapping. This address will be used later in the control of the bearer connection.

Figure 4 shows how the invention maps an IP port information transported in SDP media data to equivalent EECID information (and vice versa). As shown, a port number 402, for example, 1234678, is translated into an EECID format 404. This format is then mapped into the transport mechanism 406, for example, a Generic Identifier Transport (GIT). In the example shown in the Figure, the port is mapped into the user data portion 408 of the GIT occurring after the ID, flags and length of the Identifier. Subsequently, this information is inserted into the GIT and transported, whereby it is later used in UNI signaling messages.

Now with respect to Figure 2, in step 208, the information inserted into the ATM protocol is transmitted to the bearer connection. Thereafter, it is extracted according to the mapping and used to control the bearer connection.

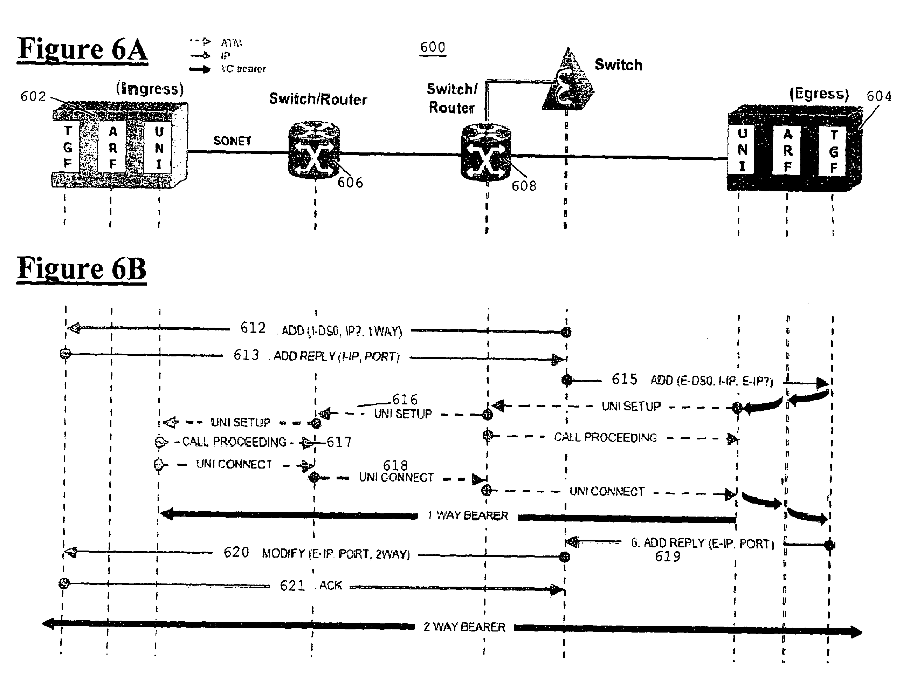

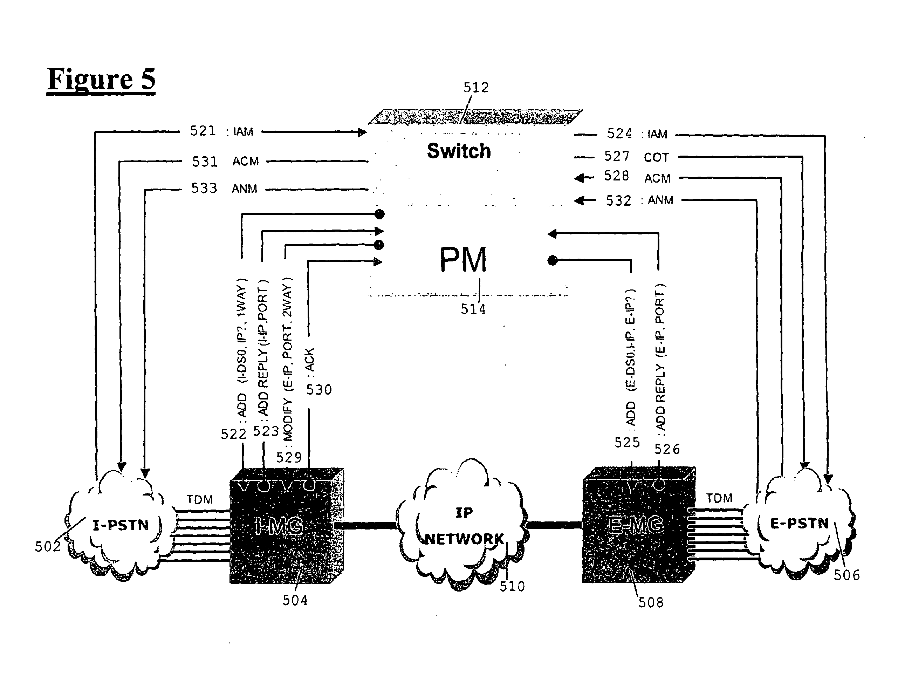

A better understanding of the invention shall be obtained in consideration of Figure 5, in which there is shown a block diagram of the system of the invention. A calling side, or ingress PSTN (I-PSTN) 502, that establishes a call, is coupled to a calling side media gateway 504, a so-called ingress media gateway (IMG). The I-PSTN 502 may communicate with the IMG 504 via time division multiplexing (TDM), for example.

On the receiving, or terminating, side is an egress PSTN (E-PSTN) 506, which receives the call. The E-PSTN 506 is coupled to a terminating side media gateway 508, or a so called egress media gateway (EMG). The IMG 504 communicates with the EMG 508 via the IP network 510. Of course, the I-PSTN and E-PSTN 502, 506 may be any type of communication network. Similarly, the network 510 may be other than an IP network.

The call signaling is controlled by a switch 512, such as the soft switch earlier mentioned. Part of the switch 512 may be a packet manager 514, which, at the control of the switch 512, packetizes and transmits signaling information to the media gateways 504, 508, to be explained later.

It shall be recognized that the system of Figure 5 is similar to a traditional call signal connection of VoIP virtual trunking calls originating and terminating at traditional class 5 switches traversing an IP a packet network. As such, the gateway control protocol signaling selected for this example is Megaco (although MGCP could equally have been used.)

The present invention, in one aspect, adds the mapping and translating functionality to the media gateway, or gateways as the case may be. With which, the functionality performs translations between VoIP and VoATM control information based on mappings defined in this document. The functionality should also perform supporting functions such as detecting that a translation is required and inserting/extracting the messages. The entity performing this functionality will be hereafter referred to as the Vertical Interface Translation Function (VITF).

Figure 5 illustrates the call signaling traffic 521 - 533 between the various elements in the system, which also may be thought of as steps of a call flow diagram. In step 521, a call is initiated at, for example, a class 5 office at the I-PSTN 502. The I-PSTN normally transmits a signal to the switch 512, typically an SS7 IAM signal. In step 522, the switch 512, through the packet manager 514 returns an add control message (ACM) to the I-MG 504 to add a call. In step 523, the VITF parses the add control command and determines that translation is necessary. In response, the VITF builds a reply message with an address for routing the call and the IMG 504 sends the message to the packet manager 514. In addition, the VITF translates a call control block provided by the calling side into an IP port number.

On the receiving side, in step 524, the switch 512 sends an IAM message to the E-PSTN 506 to signal an incoming call. In step, 525, the packet manager constructs an add control message for adding a terminating call, which includes the address and port information constructed by the calling side VITF, and sends the message to the EMG 508. In step 526, the EMG 508, which may be provided with its own VITF, determines that the incoming call is to be translated. In response, the receiving side VITF translates the information from the incoming message into an equivalent receiving side protocol.

Next, the invention provides the remaining handshaking protocol to complete the call. For purposes of example, the protocol for SS7 shall be used in this example, although other protocols are certainly within the scope of the invention. In step 527, an SS7 COT message is sent to the switch 512. In step 528, the E-PSTN 506 returns an ACM SS7 message to the switch 512, for example. The switch, via the packet manager 514, in step 529 sends a modify message to the IMG 504 with connection information from the receiving call side. In step 530, the IMG 504 returns an acknowledge signal to the switch 512, via the packet manager 514. In step 531, the switch 512 sends an ACM message to the IPSTN 502.

When an off-hook condition is detected at the receiving call side as in step 532, the EPSTN 506 sends an SS7 ANM message to the switch 512 indicating a call is received. The switch 512 then informs the IPSTN 502 that the call is received and the call is completed and a 2 way bearer channel is set up.

A more concrete example of the invention shall now be discussed with reference to Figures 6A and 6B, which respectively show the system and corresponding flow diagram of the present invention. In Figure 6A, there is shown a 2 way bearer connection 600, in which the IMG 602 connects to the EMG 604 via respective switch routers 606 and 608. The switch 610, which orchestrates the control signaling, is shown here generally as 610.

After a call is initiated in the ingress PSTN (IPSTN) and an SS7 IAM message is signaled to the switch 610, an add control message to add the call is sent from the switch to the IMG 602 in step 612. As an example of such an add control message, the following code is provided, although certainly another message that has a similar function is within the scope of the invention.

```
        MEGACO/1 [165.218.245.117]:20003
        TRANSACTION=2363 {
          CONTEXT = $ {
            ADD = T01/02/03/04 {
             MEDIA {
               LOCALCONTROL {MODE = SENDONLY }
             }
             },
            ADD = $ {
             MEDIA {
               LOCALCONTROL {MODE = RECEIVEONLY },
               LOCAL {
       v=0
       c=IN IP4 $
       m=audio $ RTP/AVP 0
                 }
               }
             }
           }
         }
```

In step 613, the IMG 602 on parsing the message detects that the second Add command in the message is for an IP termination. The IMG 602 checks its local configuration information and detects that the local packet network is, for example, an ATM network and so parameter translation is required. The VITF translates the SDP session and media parameters contained in the message according to the mappings heretofore described.

An ATM address is selected for routing of the backward ATM call based on configuration information typically provided by an ATM interface group. The VITF translates this address to an equivalent IP address, such as 111.222.333.444 in the exemplary Figure, according to the mappings described.

A local call control block is selected to handle the call, for example 12345678. This call control data (signaled in a VoATM call as an EECID) is translated to a port number by the VITF according to the mappings. Ultimately this call control data is returned to the IMG 602 as a UNI GIT IE and used to locate the call control block once when an ATM UNI SETUP message is received. The IMG 602 responds to the switch 610 with a reply signal, such as the following code.

```
         MEGACO/1 [MediaGateway1]:2000
         Reply = 2363 {
           Context = 1 {
             Add = T01/02/03/04,
             Add = A4444 {
               Media{
                 Local {
         v=0
         c=IN IP4 111.222.333.444
         m=audio 12345678 RTP/AVP 0
                 }
               }
             }
           }
         }
```

After the switch 610 sends an SS7 IAM message to the EPSTN 604 (step 524, Figure 5), the switch sends an add message to the EMG 508 to add the receiving side call in step 615. For purposes of example, the message may be constructed as follows:

```
        MEGACO/1 [165.218.245.117]:20003
        TRANSACTION=2364 {
          CONTEXT = $ {
            ADD = T05/06/07/08 {
              MEDIA {
                LOCALCONTROL { MODE = SENDRECEIVE }
              }
            },
            ADD = $ {
              MEDIA {
                LOCALCONTROL { MODE = SENDRECEIVE },
                LOCAL {
        v=0
        c=IN IP4 $
        m=audio $ RTP/AVP 0
                },
                REMOTE {
        v=0
        c=IN IP4 111.222.333.444
        m=audio 12345678 RTP/AVP 0
                 }
               }
             }
           }
        }
```

In step 616, a UNI setup message is forwarded from the EMG 604 to the IMG 602 UNI through the switches 606, 608. The setup message includes the call control data inserted into the UNI GIT IE. The IMG 602 uses the data to locate the call control block once when an ATM UNI SETUP message is received. A call proceeding message is sent from the IMG 602 to the switch in step 617 and, similarly, from switch 608 to the EMG 604. In step 618, a UNI connect message is returned from the ATM network to the EMG 604 through the switches 606, 608. In this manner, a 2-way ATM 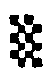 TDM interworking bearer path is setup through the EMG 604.

In step 619, the EMG 604, i.e., the VITF of the EMG, parses the message and detects that the second Add command in the message is for an IP termination. The EMG checks its local configuration information and detects that the local packet network is, for example, an ATM network and so parameter translation is required. The VITF translates the SDP session and media parameters contained in the message according to, for example, the mappings heretofore defined.

More specifically, the IP address (111.222.333.444) received in the remote descriptor SDP connection data is translated by the VITF to an equivalent address, for example, an ATM address, according to the exemplary mappings defined. This address data is used to populate a Called Party Address IE of the ATM UNI SETUP message sent by the EMG 604 in order to initiate a backward connection of ATM SVC.

Furthermore, the VITF translates the port number received in the remote descriptor media name data (i.e., 12345678) according to the mappings. This data is used at the EMG 604 to populate the Generic Information Transport IE in the ATM UNI SETUP message.

Once the ATM UNI CONNECT message is returned from the ATM network and a 2-way ATM 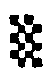 TDM interworking bearer path has been setup through the EMG 604 then the a message, such as the example message below, is returned to the switch 610.

```
        MEGACO/1 [MediaGatewayl]:2000
        Reply = 2364 {.
          Context = 2 {
            Add = T05/06/07/08,
            Add = A5555 {
              Media{
                Local{
        v=0
        c=IN IP4 555.666.777.888
        m=audio 89ABCDEF RTP/AVP 0
                 }
               }
            }
          }
        }
```

In step 620, an SS7 COT message is forwarded by the switch 610 to the EPSTN 506. In step 621 The E-PSTN returns an acknowledge signal in the form of an ACM SS7 message.

As explained in reference to Figure 5, the invention performs the remaining handshaking. A modify message in step 529 is sent from the switch to the IMG 504. The message for example purposes may be provided as follows.

```
         MEGACO/1 [165.218.245.117]:20003
         TRANSACTION=2365 {
           CONTEXT = 1 {
             MODIFY = T01/02/03/04 {
               MEDIA {
                 LOCALCONTROL {MODE = SENDRECEIVE }
               }
             },
             MODIFY = A4444 {
               MEDIA {
                 LOCALCONTROL {MODE = SENDRECEIVE },
                 REMOTE {
         v=0
         c=IN IP4 555.666.777.888
         m=audio 89ABCDEF RTP/AVP 0
                 }
               }
             }
           }
         }
```

It shall be appreciated that, in this particular example, the IP address (555.666.777.888) received remote descriptor SDP connection data is not used by the IMG 504 for signaling purposes and so no translation is required. Similarly the port number (89ABCDEF) received in the remote descriptor media name data is not required and so again no translation is required.

At this time, a 2-way ATM 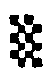 TDM interworking bearer path is essentially setup through the IMG 504. In step 530 an acknowledge signal, such as that provided below, is returned to the switch.

```
        MEGACO/1 [MediaGatewayl]:2000
        Reply = 2365 {
          Context = 1 {
            Modify = T01/02/03/04,
            Modify = A4444
          }
        }
```

The remaining signaling executed upon an off-hook condition to establish the call has already been discussed with reference to Figure 5.

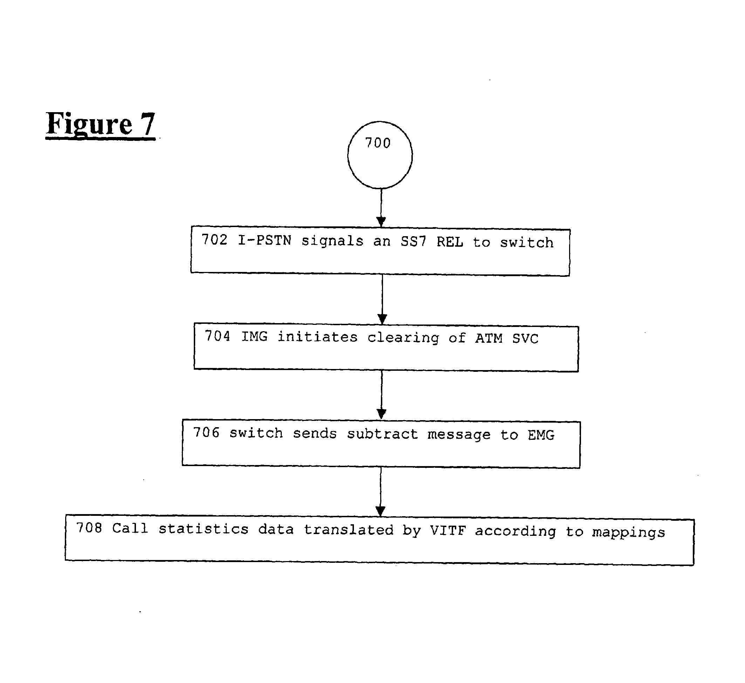

The invention further provides for the removal, or tear-down, of the call once a call is ended. The steps for tear-down will be discussed in reference to the flow diagram 700 of Figure 7. In step 702, the I-PSTN signals an SS7 REL to the switch 610 initiating the tear-down of the call. The switch 610 sends subtract message to the IMG 602, such as that shown here.

```
        MEGACO/1 [165.218.245.117]:20003
        TRANSACTION=2366 {
          CONTEXT = 1 {
            SUBTRACT = T01/02/03/04,
            SUBTRACT = A4444 {
              AUDIT { STATISTICS }
            }
          }
        }
```

In step 704, the IMG 602 initiates the clearing of the ATM SVC. Call statistics data is located and translated by the VITF at the IMG 602 according to the exemplary mappings defined above. Once the interworking bearer path is torn down the IMG 602 returns the reply message to the switch, such as follows.

```
        MEGACO/1 [MediaGateway1]:2000
        Reply = 2366 {
          Context = 1 {
            Subtract = T01/02/03/04,
            Subtract = A4444 {
              Statistics {
                  rtp/ps = 1234,
                  nt/os = 56749,
                  rtp/pr = 10000,
                  nt/or = 984726,
                  rtp/pl = 34.90,
                  rtp/jit = 9,
                  rtp/delay = 29
              }
            }
         }
       }
```

Next, the receiving side is torn-down. In step 706, the switch sends a subtract message to the EMG 604, which may be the following.

```
        MEGACO/1 [165.218.245.117]:20003
        TRANSACTION=2367 {
          CONTEXT = 2 {
            SUBTRACT = T05/06/07/08,
            SUBTRACT = A5555 {
              AUDIT { STATISTICS }
            }
          }
        }
```

In step 708, Call statistics data is located and translated by the VITF at the EMG 604 according to the predefined mappings. Once the interworking bearer path is torn down, the EMG 604 returns the reply message to the switch 610, such as given by the following reply message example.

```
         MEGACO/1 [MediaGatewayl]:2000
         Reply = 2367 {
           Context = 2 {
             Subtract = T05/06/07/08,
             Subtract = A5555 {
               Statistics {
                   rtp/ps = 4321,
                   nt/os = 647290,
                   rtp/pr = 5000,
                   nt/or = 836193,
                   rtp/pl = 45.78,
                   rtp/jit = 10,
                   rtp/delay = 34
               }
             }
           }
         }
```

Thus, the call is torn down and the network resumes operation, ready for the next call initiation.

While the present invention has been described in the context of a specific example, it shall be appreciated that the invention is not so limited to a single example, but that similar embodiments and variations are within the scope of the invention. The invention encompasses not only the IP and ATM protocols, but any mapping from one protocol to another.

The specific code provided is for example only and other code which provides the same function is certainly within the invention. The present invention proposes a standards based solution that can be employed in multi vendor networks a primary motivation, but the invention need not be standards based.

## Claims

1. A method for signaling a bearer connection coupled to a telecommunications network, wherein the telecommunications network employs a first protocol and the bearer connection employs a second protocol, the method comprising the steps of:
mapping (202) at least a portion of the first protocol to the second protocol by mapping session description protocol parameters to control Voice over ATM, VoATM, connections said connections using an ATM addressing scheme having an E.164 address, field, and Routing Domain and Area fields; and
inserting (206) a first signal of the first protocol into a second signal of the second protocol according to the mapping , wherein the first signal of the first protocol is employed in the control of the bearer connection, **characterized in that**,
the mapping step redefines (206) the E.164 address field, the Routing Domain and the Area fields into a private IP/ATM address, said private IP/ATM address consisting of an overlay area and an end-point IP address, said private IP/ATM address fitting bit-wise within said fields, thereby abiding by addressing rules of the ATM addressing scheme.

2. The method according to claim 1, wherein the second protocol is an asynchronous transfer mode ATM protocol.

3. The method according to claim 1, wherein the first protocol is an Internet Protocol IP and the second protocol is an asynchronous transfer mode ATM protocol, wherein the step of mapping maps at least a portion of the Internet Protocol to the ATM protocol.

4. The method according to claim 1, further comprising the step of translating (204) the first signal of the first protocol into a signal suitable for insertion into the second signal of the second protocol according to the mapping.

5. The method according to claim 4, wherein the first protocol is an Internet Protocol IP, wherein the step of translating (204) translates an Internet Protocol address contained in the first signal into an address that is insertable into a predetermined area of the second signal of the second protocol.

6. The method according to claim 5, wherein the second signal of the second protocol is an ATM address and the step of translating (204) translates the Internet Protocol address contained in the first signal into an address that is suitable for insertion into an area within a network prefix of the ATM address.

7. The method according to claim 6, wherein the step of mapping (202) redefines a portion of the network prefix field following an authority and format identifier.

8. The method according to claim 4, wherein the first signal of the first protocol is Internet Protocol IP port information, wherein the step of translating translates the Internet Protocol port information into a signal that is insertable into a predetermined area of the second signal of the second protocol.

9. The method according to claim 8, wherein the second signal of the second protocol is a generic identifier transport GIT information element, and wherein the step of translating (204) translates the first signal into a signal suitable for insertion into the GIT information element.

10. The method according to claim 9, wherein the step of mapping (202) maps the first signal translated into a user data area of the GIT information element.

11. An apparatus for signaling a bearer connection coupled to a telecommunications network, wherein the telecommunications network employs a first protocol and the bearer connection employs a second protocol, the apparatus comprising:
a map (310) that maps session description protocol parameters to control Voice over ATM, VoATM, connections, said connections using
an ATM addressing scheme having an E.164 address field, and Routing Domain and Area fields;
a translator (514) that translates, according to the map, between a first signal of the first protocol and a second signal of the second protocol; and
a gateway (504) that inserts the first signal translated by the translator into the second signal, wherein the first signal is employed in the control of the bearer connection, **characterized in that**,
the map (310) redefines the E.164 address field, the Routing Domain and the Area fields into a private IP/ATM address , said private IP/ATM address consisting of an overlay area and an end-point IP address, said private IP/ATM address fitting bit-wise within said fields, thereby abiding by addressing rules of the ATM addressing scheme.

12. The apparatus of claim 11, wherein the bearer connection employs an asynchronous transfer mode ATM protocol.

13. The apparatus according to claim 11, wherein the map (310) maps at least a portion of an internet protocol IP to an asynchronous transfer mode ATM protocol.

14. The apparatus according to claim 11, further wherein the map (310) maps at least a portion of the first protocol to the second protocol.

15. The apparatus according to claim 14, wherein the map (310) maps the portion of the first protocol to an area suitable for insertion into the second signal of the second protocol.

16. The apparatus according to claim 11, further comprising a switch (512).

17. The apparatus according to claim 11, further comprising an ingress media gateway (504) for receiving the first signal translated and inserted into the second signal for setting up an initiating call.

18. The apparatus according to claim 11, further comprising an egress media gateway (508) for receiving the first signal translated and inserted into the second signal for setting up a terminating call.

## Patentansprüche

1. Verfahren zur Signalisierung einer Trägerverbindung, die an ein Telekommunikationsnetz gekoppelt wird, wobei das Telekommunikationsnetz ein erstes Protokoll verwendet und die Trägerverbindung ein zweites Protokoll verwendet, und wobei das Verfahren die folgenden Schritte umfasst:
Zuordnen (202) von mindestens einem Teil des ersten Protokolls zu dem zweiten Protokoll durch Zuordnen von Parametern des Session Description Protocol (SDP) zum Steuern von Voice-over-ATM (VoATM) -Verbindungen, wobei die besagten Verbindungen ein ATM-Adressierungsschema (Asynchronous Transfer Mode) nutzen, welches ein E.164-Adressfeld sowie Routing Domain- und Bereichs-Felder enthält; und
Einfügen (206) eines ersten Signals des ersten Protokolls in ein zweites Signal des zweiten Protokolls entsprechend der Zuordnung, wobei das erste Signal des ersten Protokolls für die Steuerung der Trägerverbindung verwendet wird, **dadurch gekennzeichnet, dass**
der Zuordnungsschritt das E.164-Adressfeld, die Routing Domain- und die Bereichs-Felder umdefiniert (206) in eine private IP/ATM-Adresse, wobei die besagte private IP/ATM-Adresse aus einem Überlagerungsbereich und einer IP-Adresse eines Endpunkts besteht, wobei die besagte private IP/ATM-Adresse bitweise in die besagten Felder passt, wodurch die Adressierungsregeln des ATM-Adressierungsschemas erfüllt werden.

2. Verfahren gemäß Anspruch 1, wobei das zweite Protokoll ein ATM (Asynchronous Transfer Mode) -Protokoll ist.

3. Verfahren gemäß Anspruch 1, wobei das erste Protokoll ein Internet-Protokoll IP und das zweite Protokoll ein ATM (Asynchronous Transfer Mode) -Protokoll ist, wobei in dem Zuordnungsschritt mindestens ein Teil des Internet-Protokolls dem ATM-Protokoll zugeordnet wird.

4. Verfahren gemäß Anspruch 1, welches ferner den Schritt des Übersetzens (204) des ersten Signals des ersten Protokolls in ein Signal, welches zum Einfügen in das zweite Signal des zweiten Protokolls geeignet ist, gemäß der Zuordnung umfasst.

5. Verfahren gemäß Anspruch 4, wobei das erste Protokoll ein Internet-Protokoll IP ist, wobei der Schritt des Übersetzens (204) eine Internet-Protokoll-Adresse, die in dem ersten Signal enthalten ist, in eine Adresse übersetzt, welche in einen vorab festgelegten Bereich des zweiten Signals des zweiten Protokolls eingefügt werden kann.

6. Verfahren gemäß Anspruch 5, wobei das zweite Signal des zweiten Protokolls eine ATM-Adresse ist und der Schritt des Übersetzens (204) die Internet-Protokoll-Adresse, die in dem ersten Signal enthalten ist, in eine Adresse übersetzt, welche in einen Bereich innerhalb einer Netzkennziffer der ATM-Adresse eingefügt werden kann.

7. Verfahren gemäß Anspruch 6, wobei der Schritt des Zuordnens (202) einen Teil des Netzkennziffern-Feldes, der auf das AFI-Feld (Authority and Format Identifier, Autorisierungs- und Formatkennzeichner) folgt, umdefiniert.

8. Verfahren gemäß Anspruch 4, wobei das erste Signal des ersten Protokolls eine Internet-Protokoll (IP) -Portinformation ist, wobei der Schritt des Übersetzens die Internet-Protokoll-Portinformation in ein Signal übersetzt, das in einen vorab festgelegten Bereich des zweiten Signals des zweiten Protokolls eingefügt werden kann.

9. Verfahren gemäß Anspruch 8, wobei das zweite Signal des zweiten Protokolls ein Generic Identifier Transport (GIT) -Informationselement ist und wobei der Schritt des Übersetzens (204) das erste Signal in ein Signal übersetzt, welches zum Einfügen in das GIT-Informationselement geeignet ist.

10. Verfahren gemäß Anspruch 9, wobei der Schritt des Zuordnens (202) das erste übersetzte Signal in einen Benutzerdatenbereich des GIT-Informationselements zuordnet.

11. Vorrichtung zum Signalisieren einer Trägerverbindung, die an ein Telekommunikationsnetz gekoppelt wird, wobei das Telekommunikationsnetz ein erstes Protokoll verwendet und die Trägerverbindung ein zweites Protokoll verwendet, und wobei die Vorrichtung Folgendes umfasst:
eine Zuordnung (310), die Parameter des Session Description Protocol (SDP) zum Steuern von Voice-over-ATM (VoATM) -Verbindungen zuordnet, wobei die besagten Verbindungen ein ATM-Adressierungsschema nutzen, welches ein E.164-Adressfeld sowie Routing Domain- und Bereichs-Felder enthält;
eine Übersetzungsvorrichtung (514), die gemäß der Zuordnung in beide Richtungen zwischen einem ersten Signal des ersten Protokolls und einem zweiten Signal des zweiten Protokolls übersetzt; und
eine Gateway (504), die das erste, von der Übersetzungsvorrichtung übersetzte Signal in das zweite Signal einfügt, wobei das erste Signal für die Steuerung der Trägerverbindung verwendet wird, **dadurch gekennzeichnet, dass** die Zuordnung (310) das E.164-Adressfeld, die Routing Domain- und die Bereichs-Felder umdefiniert in eine private IP/ATM-Adresse, wobei die besagte private IP/ATM-Adresse aus einem Überlagerungsbereich und einer IP-Adresse eines Endpunkts besteht, wobei die besagte private IP/ATM-Adresse bitweise in die besagten Felder passt, wodurch die Adressierungsregeln des ATM-Adressierungsschemas erfüllt werden.

12. Vorrichtung gemäß Anspruch 11, wobei die Trägerverbindung ein ATM- (Asynchronous Transfer Mode) Protokoll verwendet.

13. Vorrichtung gemäß Anspruch 11, wobei die Zuordnung (310) mindestens einen Teil eines Internet-Protokolls IP einem ATM (Asynchronous Transfer Mode) -Protokoll zuordnet.

14. Vorrichtung gemäß Anspruch 11, wobei ferner die Zuordnung (310) mindestens einen Teil des ersten Protokolls dem zweiten Protokoll zuordnet.

15. Vorrichtung gemäß Anspruch 14, wobei die Zuordnung (310) den Teil des ersten Protokolls einem Bereich zuordnet, welcher geeignet ist für das Einfügen in das zweite Signal des zweiten Protokolls.

16. Vorrichtung gemäß Anspruch 11, welche ferner einen Switch (512) umfasst.

17. Vorrichtung gemäß Anspruch 11, welche ferner eine IMG (Ingress Media Gateway, Eintritts-Medien-Gateway) (504) umfasst zum Empfangen des ersten Signals, welches übersetzt und in das zweite Signal eingefügt wurde, um einen gehenden Anruf einzurichten.

18. Vorrichtung gemäß Anspruch 11, welche ferner eine EMG (Egress Media Gateway, Austritts-Medien-Gateway) (508) umfasst zum Empfangen des ersten Signals, welches übersetzt und in das zweite Signal eingefügt wurde, um einen ankommenden Anruf einzurichten.

## Revendications

1. Procédé de signalisation d'une connexion support couplée à un réseau de télécommunication, dans lequel le réseau de télécommunication utilise un premier protocole et la connexion support utilise un second protocole, le procédé comprenant les étapes de :
mappage (202) d'au moins une partie du premier protocole sur le second protocole en mappant des paramètres de protocole de description de session pour commander des connexions VoATM (*Voice over ATM),* lesdites connexions utilisant un schéma d'adressage ATM comprenant un champ Adresse E.164 et des champs Domaine de Routage et Zone ;
insertion (206) d'un premier signal du premier protocole dans un second signal du second protocole conformément au mappage, dans lequel le premier signal du premier protocole est utilisé dans la commande de la connexion support, **caractérisé en ce que**
l'étape de mappage redéfinit (206) le champ Adresse E.164, les champs Domaine de Routage et Zone en une adresse IP/ATM privée, ladite adresse IP/ATM privée étant composée d'une zone de superposition et d'une adresse IP de point d'extrémité, ladite adresse IP/ATM privée s'insérant bit par bit dans lesdits champs, respectant ainsi les règles d'adressage du schéma d'adressage ATM.

2. Procédé selon la revendication 1, dans lequel le second protocole est un protocole de mode de transfert asynchrone ATM.

3. Procédé selon la revendication 1, dans lequel le premier protocole est un protocole Internet IP et le second protocole est un protocole de mode de transfert asynchrone ATM, dans lequel l'étape de mappage mappe au moins une partie du protocole Internet sur le protocole ATM.

4. Procédé selon la revendication 1, comprenant, en outre, l'étape de traduction (204) du premier signal du premier protocole en un signal adapté pour être inséré dans le second signal du second protocole conformément au mappage.

5. Procédé selon la revendication 4, dans lequel le premier protocole est un protocole Internet IP, dans lequel l'étape de traduction (204) traduit une adresse de protocole Internet contenue dans le premier signal en une adresse qui peut être insérée dans une zone prédéterminée du second signal du second protocole.

6. Procédé selon la revendication 5, dans lequel le second signal du second protocole est une adresse ATM et l'étape de traduction (204) traduit l'adresse de protocole Internet contenue dans le premier signal en une adresse qui est adaptée pour être insérée dans une zone dans un préfixe réseau de l'adresse ATM.

7. Procédé selon la revendication 6, dans lequel l'étape de mappage (202) redéfinit une partie du champ de préfixe réseau suivant un identificateur d'autorité et de format.

8. Procédé selon la revendication 4, dans lequel le premier signal du premier protocole est une information de port de protocole Internet IP, dans lequel l'étape de traduction traduit l'information de port de protocole Internet en un signal qui peut être inséré dans une zone prédéterminée du second signal du second protocole.

9. Procédé selon la revendication 8, dans lequel le second signal du second protocole est un élément d'information de transport d'identificateur générique GIT et dans lequel l'étape de traduction (204) traduit le premier signal en un signal adapté pour être inséré dans l'élément d'information GIT.

10. Procédé selon la revendication 9, dans lequel l'étape de mappage (202) mappe le premier signal traduit dans une zone de données utilisateur de l'élément d'information GIT.

11. Dispositif de signalisation d'une connexion support couplée à un réseau de télécommunication, dans lequel le réseau de télécommunication utilise un premier protocole et la connexion support utilise un second protocole, le dispositif comprenant :
une application (310) qui mappe des paramètres de protocole de description de session pour commander des connexions VoATM *(Voice over ATM),* lesdites connexions utilisant un schéma d'adressage ATM comprenant un champ Adresse E.164 et des champs Domaine de Routage et Zone ;
un dispositif de traduction (514) qui effectue une traduction, selon l'application, entre un premier signal du premier protocole et un second signal du second protocole ; et
une passerelle (504) qui insère le premier signal traduit par le dispositif de traduction dans le second signal, dans lequel le premier signal est utilisé dans la commande de la connexion support, **caractérisé en ce que**
l'application (310) redéfinit le champ Adresse E.164, les champs Domaine de Routage et Zone en une adresse IP/ATM privée, ladite adresse IP/ATM privée étant composée d'une zone de superposition et d'une adresse IP de point d'extrémité, ladite adresse IP/ATM privée s'insérant bit par bit dans lesdits champs, respectant ainsi les règles d'adressage du schéma d'adressage ATM.

12. Dispositif selon la revendication 11, dans lequel la connexion support utilise un protocole de mode de transfert asynchrone ATM.

13. Dispositif selon la revendication 11, dans lequel l'application (310) mappe au moins une partie d'un protocole Internet IP sur un protocole de mode de transfert asynchrone ATM.

14. Dispositif selon la revendication 11, dans lequel, en outre, l'application (310) mappe au moins une partie du premier protocole sur le second protocole.

15. Dispositif selon la revendication 14, dans lequel l'application (310) mappe la partie du premier protocole sur une zone adaptée pour être insérée dans le second signal du second protocole.

16. Dispositif selon la revendication 11, comprenant, en outre, un commutateur (512).

17. Dispositif selon la revendication 11, comprenant, en outre, une passerelle média d'entrée (504) pour recevoir le premier signal traduit et inséré dans le second signal pour établir un appel de départ.

18. Dispositif selon la revendication 11, comprenant, en outre, une passerelle média de sortie (508) pour recevoir le premier signal traduit et inséré dans le second signal pour établir un appel d'arrivée.
